(19) Europäisches Patentamt
European Patent Office
Office européen des brevets

(11) **EP 4 794 000 A1**

(12) **EUROPEAN PATENT APPLICATION**
published in accordance with Art. 153(4) EPC

(43) Date of publication:
**19.08.2026 Bulletin 2026/34**

(21) Application number: **25869637.6**

(22) Date of filing: **19.11.2025**

(51) International Patent Classification (IPC):
***H01M 4/04*** *(2006.01)* ***H01M 4/1395*** *(2010.01)*
***H01M 10/42*** *(2006.01)* ***H01M 10/052*** *(2010.01)*
***H01M 50/204*** *(2021.01)* ***H01M 4/02*** *(2006.01)*

(52) Cooperative Patent Classification (CPC):
Y02E 60/10

(86) International application number:
**PCT/KR2025/019126**

(87) International publication number:
**WO 2026/141978 (02.07.2026 Gazette 2026/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **24.12.2024 KR 20240195959**
**18.11.2025 KR 20250175151**

(71) Applicant: **LG ENERGY SOLUTION, LTD.**
**Seoul 07335 (KR)**

(72) Inventors:
- **HONG, Doyoung**
  **Daejeon 34122 (KR)**
- **KWON, Yohan**
  **Daejeon 34122 (KR)**
- **LEE, Ilha**
  **Daejeon 34122 (KR)**
- **LIM, Sung Chul**
  **Daejeon 34122 (KR)**
- **CHAE, Jonghyun**
  **Daejeon 34122 (KR)**

(74) Representative: **Hoffmann Eitle**
**Patent- und Rechtsanwälte PartmbB**
**Arabellastraße 30**
**81925 München (DE)**

# (54) METHOD FOR MANUFACTURING PRE-LITHIATED NEGATIVE ELECTRODE AND LITHIUM SECONDARY BATTERY COMPRISING PRE-LITHIATED NEGATIVE ELECTRODE MANUFACTURED THEREBY

(57) The present invention relates to a method for manufacturing a pre-lithiated negative electrode capable of suppressing formation of by-products during a pre-lithiation process, the method including the steps of preparing a negative electrode including a negative electrode active material layer having a moisture content of 800 ppm or more and provided on at least one surface of a negative electrode current collector layer; and bringing a transfer stack including a lithium metal layer and a base layer into contact with one surface of the negative electrode active material layer, with the lithium metal layer facing the one surface, and also relates to a lithium secondary battery including a pre-lithiated negative electrode manufactured therefrom.

EP 4 794 000 A1

[Figure 1]

(a)
START
PREPARE NEGATIVE ELECTRODE INCLUDING NEGATIVE ELECTRODE ACTIVE MATERIAL LAYER HAVING MOISTURE CONTENT OF 800 PPM OR MORE AND PROVIDED ON ONE SURFACE OF NEGATIVE ELECTRODE CURRENT COLLECTOR LAYER
S1
BRING TRANSFER STACK INCLUDING LITHIUM METAL LAYER AND BASE LAYER INTO CONTACT WITH ONE SURFACE OF NEGATIVE ELECTRODE ACTIVE MATERIAL LAYER, WITH LITHIUM METAL LAYER FACING ONE SURFACE
S2
END
(b)
START
PREPARE TRANSFER STACK INCLUDING LITHIUM METAL LAYER AND BASE LAYER
S0
PREPARE NEGATIVE ELECTRODE INCLUDING NEGATIVE ELECTRODE ACTIVE MATERIAL LAYER HAVING MOISTURE CONTENT OF 800 PPM OR MORE AND PROVIDED ON ONE SURFACE OF NEGATIVE ELECTRODE CURRENT COLLECTOR LAYER
S1
BRING TRANSFER STACK INCLUDING LITHIUM METAL LAYER AND BASE LAYER INTO CONTACT WITH ONE SURFACE OF NEGATIVE ELECTRODE ACTIVE MATERIAL LAYER, WITH LITHIUM METAL LAYER FACING THE ONE SURFACE
S2
PRESS NEGATIVE ELECTRODE ACTIVE MATERIAL LAYER IN CONTACT WITH TRANSFER STACK
S3
REMOVE BASE LAYER AFTER AGING
S4
END

## Description

[Technical Field]

This application claims priority to and the benefit of Korean Patent Application No. 10-2024-0195959 filed in the Korean Intellectual Property Office on December 24, 2024 and Korean Patent Application No. 10-2025-0175151 filed in the Korean Intellectual Property Office on November 18, 2025, the entire contents of which are incorporated herein by reference.

The present invention relates to a method for manufacturing a pre-lithiated negative electrode and a lithium secondary battery including a pre-lithiated negative electrode manufactured therefrom.

[Background Art]

Due to the rapid increase in the use of fossil fuels, the demand for the use of alternative energy or clean energy is increasing, and as part thereof, the fields that are being studied most actively are the fields of power generation and power storage using an electrochemical reaction.

At present, a secondary battery is a representative example of an electrochemical device that uses such electrochemical energy, and the specified range of use thereof tends to be gradually expanding.

Along with the technology development and increased demand for mobile devices, the demand for secondary batteries as energy sources is increasing sharply. Among such secondary batteries, lithium secondary batteries having high energy density and voltage, long cycle life, and low self-discharging rate have been commercialized and widely used. In addition, research is being actively conducted on a method for manufacturing a high-density electrode having a higher energy density per unit volume as an electrode for such a high-capacity lithium secondary battery.

In general, a secondary battery includes a positive electrode, a negative electrode, a separator interposed between the positive electrode and the negative electrode, an electrolyte, and the like. In addition, the electrode such as a positive electrode and a negative electrode may have an electrode active material layer provided on a current collector.

Note that lithium secondary batteries undergo lithium loss from the first charge after a battery is manufactured. During subsequent charging and discharging cycles and high-temperature storage periods, lithium loss continues to occur, albeit in very small amounts, thereby causing progressive degradation of the battery. To compensate for this lithium loss, a pre-lithiation process is applied to additionally intercalate lithium into the battery before operating the battery. However, this is problematic because by-products are generated during the pre-lithiation reaction and affect the performance of the battery.

[Detailed Description of the Invention]

[Technical Problem]

The present invention has been made in an effort to provide a method for manufacturing a pre-lithiated negative electrode for suppressing formation of by-products during a pre-lithiation process, and a lithium secondary battery including a pre-lithiated negative electrode manufactured therefrom.

[Technical Solution]

An exemplary embodiment of the present specification provides a method for manufacturing a pre-lithiated negative electrode, including: preparing a negative electrode including a negative electrode active material layer having a moisture content of 800 ppm or more and provided on at least one surface of a negative electrode current collector layer; and

bringing a transfer stack (transfer laminate) including a lithium metal layer and a base layer into contact with one surface of the negative electrode active material layer, with the lithium metal layer facing the one surface.

An exemplary embodiment of the present specification provides a lithium secondary battery including: a positive electrode; a pre-lithiated negative electrode manufactured by the above-described manufacturing method; a separator; and an electrolyte solution.

An exemplary embodiment of the present specification provides a battery module or battery pack including the lithium secondary battery described above.

Further, an exemplary embodiment of the present specification provides a battery pack including the battery module described above.

[Advantageous Effects]

According to an exemplary embodiment of the present specification, a method for manufacturing a pre-lithiated negative electrode capable of suppressing formation of by-products, particularly lithium nitride, during pre-lithiation by controlling a moisture content of a negative electrode active material layer to be pre-lithiated, and a lithium secondary battery including a pre-lithiated negative electrode manufactured therefrom can be provided.

According to an exemplary embodiment of the present specification, a method for manufacturing a pre-lithiated negative electrode capable of reducing lithium loss by suppressing the formation of lithium nitride, which is not easily decomposed at a negative electrode potential of a full cell during pre-lithiation and can serve as a resistance layer, in a central region of a negative electrode surface, and a lithium secondary battery including a pre-lithiated negative electrode manufactured therefrom can be provided.

[Brief Description of Drawings]

FIGS. 1(a) and 1(b) are flowcharts showing a method for manufacturing a pre-lithiated negative electrode according to an exemplary embodiment of the present specification.

FIGS. 2(a) and 2(b) are diagrams schematically showing the degree of formation of a lithium oxide layer depending on the moisture content of a negative electrode active material layer and the corresponding pre-lithiation reaction rate.

FIG. 3 shows a surface of a pre-lithiated negative electrode manufactured according to an exemplary embodiment of the present specification, photographed using a digital camera (SONY A6000).

FIG. 4 is a diagram showing XPS analysis results for a peripheral region and a central region (a by-product-concentrated formation region) on the surface of a pre-lithiated negative electrode manufactured according to an exemplary embodiment of the present specification.

FIG. 5 is a diagram showing a comparison of the surfaces of the negative electrodes of Example 1-1 and Comparative Example 1-1 of the present invention, after being respectively photographed.

FIG. 6 is a diagram showing XPS analysis results for the by-product-concentrated formation regions of Example 1-1, Comparative Example 1-1, and Comparative Example 1-2 of the present invention.

FIGS. 7 and 8 are diagrams showing charge/discharge graphs of Example 2-1 and Comparative Example 2-1 of the present invention, respectively.

[Best Mode]

Before describing the present invention, some terms are first defined.

As used herein, when it is described that one part "includes", "comprises" or "has" one constituent element, unless otherwise specifically described, this does not mean that another constituent element is excluded, but means that another constituent element may be further included.

It will be further understood that the terms "comprises", "includes" or "have" when used in the present specification specify the presence of stated features, integers, steps, constitutional elements and/or combinations thereof, but do not preclude the presence or addition of one or more other features, integers, steps, constitutional elements, and/or combinations thereof.

In the present specification, when a part of a layer or the like is referred to as being "above" or "on" another part, it may be directly on the other element or an intervening element may also be present. In contrast, when an element is referred to as being "directly on" another element, there are no intervening elements present. Further, when an element is referred to as being "above" or "on" a reference portion, the element is positioned above or below the reference portion, and it does not necessarily mean that the element is positioned "above" or "on" in a direction opposite to gravity.

In the present specification, when one member is referred to as being provided on "both surfaces" of another member, this means that one member is provided on one surface of another member, and one member is also provided on another surface corresponding to the one surface. In addition, this includes not only a case where one member is in direct contact with another member, but also a case where still another member is present between the two members.

In the present specification, 'p to q' means a range of 'p or more and q or less'.

In the present specification, the terms such as "~unit" and "device refer to units for processing at least one function or operation.

In the present specification, "Dn" refers to a particle size distribution, and refers to a particle diameter (average particle diameter) at the n% point in the cumulative distribution of the number of particles according to the particle diameter. That is, $D_{50}$ is the particle diameter at the 50% point of the cumulative distribution of the number of particles according to the particle diameter, $D_{90}$ is the particle diameter at the 90% point of the cumulative distribution of the number of particles

according to the particle diameter, and $D_{10}$ is the particle diameter at the 10% point of the cumulative distribution of the number of particles according to the particle diameter. Note that the average particle diameter may be measured using a laser diffraction method. Specifically, after powder to be measured is dispersed in a dispersion medium, the resultant dispersion is introduced into a commercially available laser diffraction particle size measurement apparatus (for example, Microtrac S3500) in which a difference in a diffraction pattern according to the particle size is measured, when a laser beam passes through particles, and then a particle size distribution is calculated.

In the present specification, a dry room refers to a dehumidification chamber capable of controlling the moisture content in the air to a predetermined value or less to improve product quality and yield, and a room in which the indoor air condition is a predetermined dew point temperature or less.

In this case, in the present specification, the dew point or dew point temperature refers to the lowest temperature at which water vapor is cooled to the extent that dew forms before the vapor becomes liquid water.

In the present specification, the moisture content refers to an amount including both free water (a form of water physically trapped inside a sample such that evaporation or movement readily occurs) and bound water (a form of water combined with other components in the sample and unable to move freely), which are forms of water contained in a sample, and the moisture content can be measured by a Karl Fischer method. Specifically, before a contact step of a transfer stack, after a negative electrode active material layer is provided on at least one surface of a negative electrode current collector layer and stored at a predetermined relative humidity, a sample (about 0.5 g to 1 g) of the negative electrode active material layer having an area of 3 cm × 4 cm is taken, placed in a test container for moisture evaluation in a dry room, and sealed. Thereafter, the sample is placed in a measuring oven, the target temperature is set to 150°C such that generated moisture is transferred to a Karl Fischer moisture measuring unit, and the moisture content is measured according to the following Formula M.

[Formula M]

$$M = (A - B)/C$$

In Formula M above,

M is a moisture content (ppm), A is a measured moisture content (μg), B is a measured moisture content without sample (μg), and C is a measured sample amount (g).

A lithium loss (%) of a pre-lithiated negative electrode manufactured according to an exemplary embodiment of the present specification may be calculated according to the following Formula L.

lithium loss (%) = 100 - [{(charge capacity of (pristine) negative electrode half-cell without pre-lithiation) - (charge capacity of negative electrode half-cell with pre-lithiation)}/(measured capacity of lithium metal layer) x 100]% [Formula L]

In Formula L above, the charge capacity may be measured by manufacturing a negative electrode half-cell using a pre-lithiated negative electrode manufactured according to an exemplary embodiment of the present specification, and then performing one cycle of charging at 0.1 C to 0.005 V under CC/CV (0.005 C cut) and discharging at 0.1 C to 1.5 V under CC using an electrochemical charge/discharge device. In this case, the negative electrode half-cell may be manufactured by using, as a working electrode, a pre-lithiated negative electrode manufactured according to an exemplary embodiment of the present specification, and using, as a counter electrode, a lithium metal thin film having a thickness of 100 μm and cut into a circular shape with an area of 1.7671 $cm^2$, interposing a polyethylene separator therebetween, accommodating them in a coin-type case, and injecting an electrolyte solution, which is prepared by dissolving $LiPF_6$ as a lithium salt at a concentration of 1.0 M in an organic solvent in which ethylene carbonate (EC), ethyl methyl carbonate (EMC), and diethyl carbonate (DEC) are mixed in a volume ratio of 20:10:70.

In addition, in Formula L above, the (pristine) negative electrode half-cell without pre-lithiation refers to a negative electrode half-cell manufactured in the same manner as a pre-lithiated negative electrode half-cell manufactured according to an exemplary embodiment of the present specification, except that no pre-lithiation is applied. The measured capacity of the lithium metal layer may be measured by transferring the lithium metal layer included in the transfer stack according to an exemplary embodiment of the present specification to a Cu Foil, separately manufacturing a half-cell using a lithium metal thin film as a counter electrode, and performing one discharge at 0.1 C to 1 V under CC.

In an exemplary embodiment of the present specification, the particle size or particle diameter may refer to the average diameter or representative diameter of each grain forming metal powder.

As used herein, the singular forms of terms, such as "a" and "an", are intended to include the plural forms as well, unless the context clearly indicates otherwise.

It should be understood that the terms or words used throughout the specification should not be construed as being limited to their ordinary or dictionary meanings, but construed as having meanings and concepts consistent with the technical idea of the present invention, based on the principle that an inventor may properly define the concepts of the words or terms to best explain the invention.

Hereinafter, preferred exemplary embodiments of the present invention will be described in detail. However, it should be understood that the exemplary embodiments of the present invention may be modified in various forms and the scope of the present invention is not limited to the exemplary embodiments described below.

**<Method for Manufacturing Pre-lithiated Negative Electrode>**

A method for manufacturing a pre-lithiated negative electrode according to an exemplary embodiment of the present specification includes the steps of: preparing a negative electrode including a negative electrode active material layer having a moisture content of 800 ppm or more and provided on at least one surface of a negative electrode current collector layer; and bringing a transfer stack including a lithium metal layer and a base layer into contact with one surface of the negative electrode active material layer, with the lithium metal layer facing the one surface.

According to the present invention, by pre-lithiating a transfer stack including a lithium metal layer and a base layer on a negative electrode active material layer through a direct contact method, lithium remaining on the electrode surface can be minimized, and such a process can be applied to a roll-to-roll process that is useful for producing electrodes in large quantities compared with other methods, thereby enabling a fast process speed and being effective for mass production. However, when the temperature of the negative electrode surface increases due to the exothermic pre-lithiation reaction, side reactions may also occur, forming various types of lithium by-products. In particular, lithium nitride may be predominantly formed in high-temperature environments. The lithium nitride is not easily decomposed at the negative electrode potential of the battery, which may lead to lithium loss and act as a resistive layer, thereby causing deterioration in battery performance.

Therefore, the researchers of the present invention attempted to suppress the formation of lithium nitride by controlling the degree of heat generation through reduction of the pre-lithiation reaction rate, and conceived that increasing the moisture content of the negative electrode active material layer to be pre-lithiated causes a lithium oxide layer to be formed by a reaction between the lithium metal layer of the transfer stack and the moisture, and the lithium oxide layer acts as a buffer for the pre-lithiation reaction to slow the reaction rate.

Note that a general negative electrode is dried at 110°C to 120°C under vacuum for about 10 hours to control the moisture content to 500 ppm or less, thereby suppressing side reactions with the electrolyte. However, in the present invention, even when the moisture content is increased, the pre-lithiation is performed, and thus the moisture is consumed through a reaction with the lithium metal layer to form a lithium oxide layer, so that the moisture content of the pre-lithiated negative electrode can instead be maintained at a low level, thereby reducing the likelihood of side reactions with the electrolyte solution.

That is, in the present invention, by pre-lithiating a negative electrode active material layer having an increased moisture content, the moisture reacts with the lithium metal layer to form a lithium oxide layer. The lithium oxide layer contains LiOH, $Li_2O$, and $Li_2CO_3$ having significantly lower ion conductivity than $Li_3N$ or $Li_xSi$, thereby serving as a buffer in the pre-lithiation reaction to reduce the reaction rate and control the degree of heat generation. By controlling the degree of heat generation in this manner and suppressing an excessive increase in the temperature of the negative electrode, the formation of lithium nitride can be suppressed, thereby preventing lithium loss. In addition, $Li_2CO_3$ formed as one of the final forms in the lithium oxide layer is much more easily decomposed than lithium nitride during battery operation and can instead act as a lithium source.

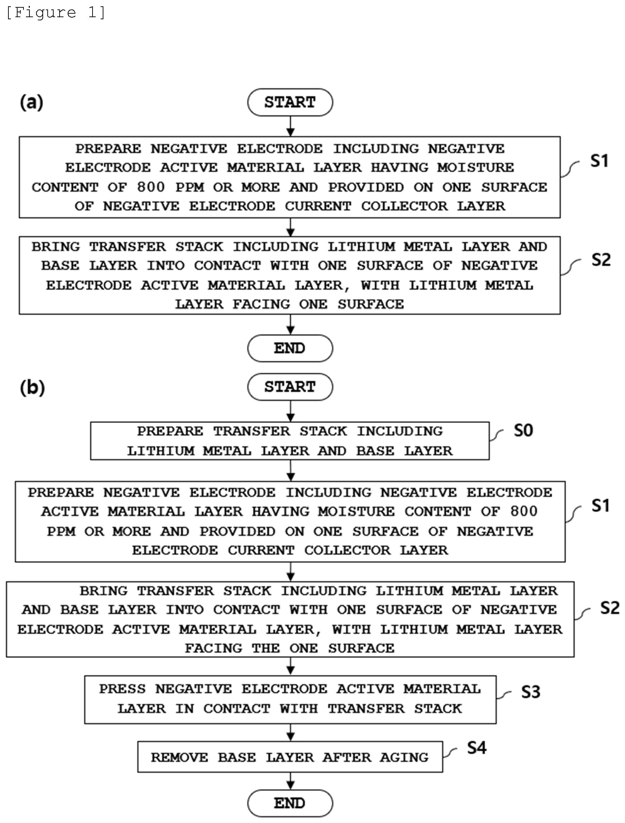

FIGS. 1(a) and 1(b) are flowcharts showing a method for manufacturing a pre-lithiated negative electrode according to an exemplary embodiment of the present specification.

Specifically, FIG. 1(a) shows a method for manufacturing a negative electrode, including a step (S1) of preparing a negative electrode including a negative electrode active material layer having a moisture content of 800 ppm or more and provided on one surface of a negative electrode current collector layer; and a step (S2) of bringing a transfer stack including a lithium metal layer and a base layer into contact with one surface of the negative electrode active material layer, with the lithium metal layer facing the one surface.

FIG. 1(b) more specifically shows a method for manufacturing a negative electrode according to an exemplary embodiment of the present specification, and the method includes a step (S0) of preparing a transfer stack including a lithium metal layer and a base layer; a step (S1) of preparing a negative electrode including a negative electrode active material layer having a moisture content of 800 ppm or more and provided on one surface of a negative electrode current collector layer; a step (S2) of bringing a transfer stack including a lithium metal layer and a base layer into contact with one surface of the negative electrode active material layer, with the lithium metal layer facing the one surface; a step (S3) of pressing the negative electrode active material layer in contact with the transfer stack; and a step (S4) of removing the base layer after aging.

In this case, although FIG. 1(b) shows that step S0 and step S1 are performed sequentially, step S0 and step S1 may be performed simultaneously, or step S1 may be performed first, and the order is not particularly limited as long as the moisture content of the negative electrode active material layer is 800 ppm or more before contact of the transfer stack.

In addition, although FIG. 1(b) shows that steps S2 and S3 are performed sequentially, steps S2 and S3 may be performed simultaneously, and the order is not particularly limited.

Hereinafter, each step described in FIG. 1(a) and FIG. 1(b) will be specifically described. However, an exemplary embodiment of the present specification is not necessarily limited by FIG. 1(a) and FIG. 1(b) or other drawings, and the drawings are merely intended to describe exemplary embodiments.

A method for manufacturing a pre-lithiated negative electrode according to an exemplary embodiment of the present specification includes a step of preparing a negative electrode including a negative electrode active material layer having a moisture content of 800 ppm or more and provided on at least one surface of a negative electrode current collector layer.

In an exemplary embodiment of the present specification, the moisture content of the negative electrode active material layer may be 800 ppm or more and 3000 ppm or less, specifically 1000 ppm or more and 3000 ppm or less, and more specifically 1000 ppm or more and 2800 ppm or less, 1000 ppm or more and 2600 ppm or less, 1000 ppm or more and 2400 ppm or less, 1000 ppm or more and 2200 ppm or less, 1000 ppm or more and 2000 ppm or less, 1200 ppm or more and 3000 ppm or less, or 1200 ppm or more and 2000 ppm or less. When the moisture content of the negative electrode active material layer falls within the above range, a lithium oxide layer can be sufficiently formed, thereby slowing the pre-lithiation reaction rate to reduce lithium loss and preventing a decrease in initial capacity that may occur when the moisture content is excessively high.

The step of preparing a negative electrode including a negative electrode active material layer having a moisture content of 800 ppm or more and provided on at least one surface of a negative electrode current collector layer according to an exemplary embodiment of the present specification may include a step of providing a negative electrode active material layer on at least one surface of the negative electrode current collector layer, and then storing it at a relative humidity of 2% or more and 20% or less to increase the moisture content of the negative electrode active material layer. That is, the moisture content may be controlled by adjusting the relative humidity during storage of the negative electrode active material layer.

In an exemplary embodiment of the present specification, the relative humidity during storage after the negative electrode active material layer is provided on at least one surface of the negative electrode current collector layer may be 2% or more and 20% or less, specifically 3% or more and 18% or less, and more specifically 4% or more and 16% or less, 4% or more and 14% or less, 5% or more and 12% or less, 5% or more and 10% or less, or 5% or more and 9.6% or less. When the relative humidity during storage after the negative electrode active material layer is provided falls within the above range, the target moisture content of the negative electrode active material layer can be obtained, thereby slowing the pre-lithiation reaction rate and suppressing the formation of lithium nitride.

In an exemplary embodiment of the present specification, during storage after a negative electrode active material layer is provided on at least one surface of the negative electrode current collector layer, the storage may be performed in a dry room in which the dew point temperature is -30°C or higher and 0° or lower, specifically -25°C or higher and -2° or lower, and more specifically -20°C or higher and -4° or lower, -20°C or higher and -6° or lower, -15°C or higher and -8° or lower, or -15°C or higher and -8.2° or lower. In this case, the target moisture content of the negative electrode active material layer can be obtained.

The method for manufacturing a pre-lithiated negative electrode according to an exemplary embodiment of the present specification includes a step of bringing a transfer stack including a lithium metal layer and a base layer into contact with one surface of the negative electrode active material layer, with the lithium metal layer facing the one surface, which is a step for pre-lithiating the negative electrode active material layer by transferring the transfer stack such that the lithium metal layer faces one surface of the negative electrode active material layer.

In particular, in an exemplary embodiment of the present specification, the step of bringing a transfer stack including a lithium metal layer and a base layer into contact with one surface of the negative electrode active material layer, with the lithium metal layer facing the one surface, may include a step of forming a lithium oxide layer through a reaction between moisture in the negative electrode active material layer and the lithium metal layer.

In an exemplary embodiment of the present specification, the lithium oxide layer may include one or more selected from the group consisting of LiOH, $Li_2O$, $Li_2O_2$, $Li_2CO_3$, and a combination thereof. In this case, in the present specification, whether the lithium oxide layer has been formed can be confirmed by the presence of $Li_2O$ to $Li_2CO_3$ peaks in XPS (X-ray Photoelectron Spectroscopy) analysis. The XPS analysis may be performed on a surface portion of the transfer stack in contact with one surface of the negative electrode active material layer. For example, when the negative electrode active material layer and the transfer stack (lithium metal layer/base layer) are stacked in that order, XPS depth profile analysis may be performed on a main surface (wide surface) of the base layer located at the outermost side under the following conditions.

- X-ray spot size: 200 μm
- Etching conditions (sputtering gun): monatomic Ar (energy: 2000 eV, current: high, raster width: 1mm), 1.87nm/s etching rate (based on $Ta_2 0_5$).
- Charge compensation (flood gun): 0.3 V, 150 μA.

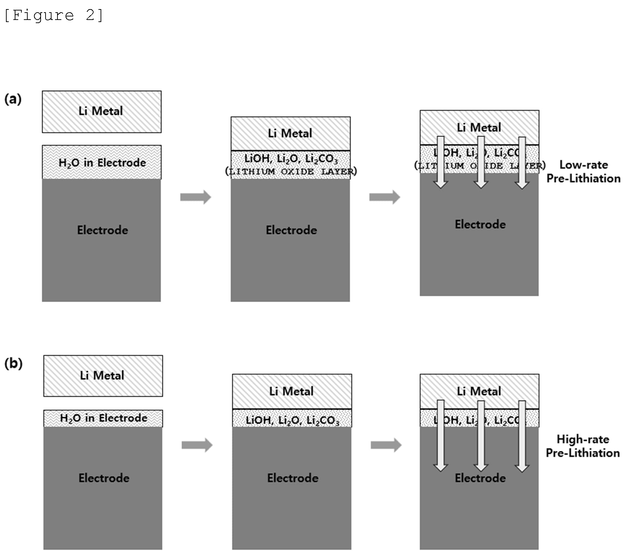

FIGS. 2(a) and 2(b) are diagrams schematically showing the degree of formation of a lithium oxide layer depending on the moisture content of a negative electrode active material layer and the corresponding pre-lithiation reaction rate. FIGS. 2(a) and 2(b) illustrate a moisture ($H_2O$) layer as if it is present on the negative electrode for explanatory purposes, in which the height of the moisture ($H_2O$) layer is depicted higher when the moisture content of the negative electrode active material layer is high (refer to FIG. 2(a)) and is depicted lower when the moisture content is low (refer to FIG. 2(b)). Additionally, for simplicity, only the lithium metal (Li metal) layer of the transfer stack is shown, and the base layer is omitted.

Specifically, FIG. 2(a) is a diagram schematically illustrating a lithium metal layer (with the base layer omitted) in contact with a negative electrode active material layer having a high moisture content, showing that a sufficiently large amount of a lithium oxide layer is formed by a reaction between the lithium metal layer and moisture, resulting in a lower pre-lithiation reaction rate (refer to the length of the arrow directed from the lithium metal layer toward the negative electrode). When the pre-lithiation reaction rate is reduced, the degree of heat generation can be controlled to that extent, thereby suppressing the formation of lithium nitride.

FIG. 2(b) is a diagram schematically illustrating a lithium metal layer (with the base layer omitted) in contact with a negative electrode active material layer having a low moisture content, showing that an amount of a lithium oxide layer formed by a reaction between the lithium metal layer and moisture is small and therefore the lithium oxide layer cannot sufficiently serve as a buffer, resulting in a fast pre-lithiation reaction rate (refer to the length of the arrow directed from the lithium metal layer toward the negative electrode). When the pre-lithiation reaction rate is fast, the temperature of the negative electrode surface increases and side reactions also occur, which may lead to the formation of various types of lithium byproducts. In particular, lithium nitride may be predominantly formed in high-temperature environments.

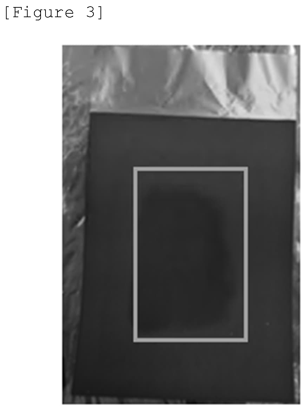

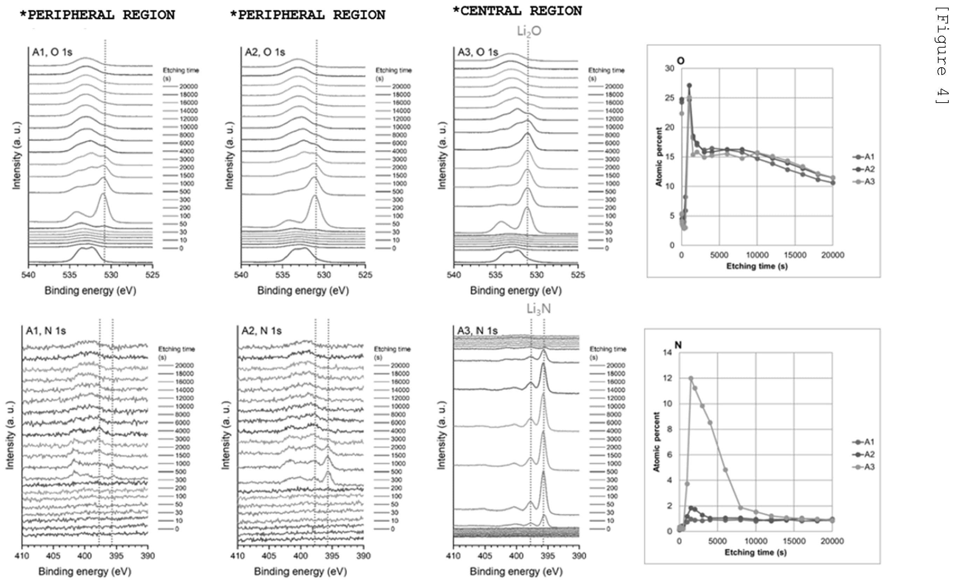

FIG. 3 shows a surface of a pre-lithiated negative electrode manufactured according to an exemplary embodiment of the present specification, photographed using a digital camera (SONY A6000). Referring to FIG. 3, a central region (indicated by a gray box) that appears dark in a rectangular shape, unlike the peripheral region, can be confirmed on the surface of the pre-lithiated negative electrode. To analyze the composition of the regions, XPS analysis was performed on each of two arbitrary points in the peripheral region and on the central region (by-product-concentrated formation region) and the results are shown in FIG. 4.

Referring to FIG. 4, the peripheral region of the surface of the negative electrode shown in FIG. 3 was measured to have nitrogen (N) less than 2% based on peaks, whereas the central region appearing dark in a rectangular shape was confirmed to have nitrogen (N) at a level of about 12%. Through this, it can be seen that lithium nitride was predominantly formed among the by-products. In addition, in the method for manufacturing a pre-lithiated negative electrode according to an exemplary embodiment of the present specification, the types and provision methods of the negative electrode current collector layer and the negative electrode active material layer will be described below.

The method for manufacturing a pre-lithiated negative electrode according to an exemplary embodiment of the present specification may include a step of preparing a transfer stack including a lithium metal layer and a base layer, which may be performed before or simultaneously with the step of preparing a negative electrode including a negative electrode active material layer having a moisture content of 800 ppm or more.

The method for manufacturing a pre-lithiated negative electrode according to an exemplary embodiment of the present specification performs pre-lithiation by a lithium direct contact method on at least one surface of the negative electrode active material layer in order to improve Coulombic efficiency by addressing irreversible capacity loss, and features lower cell degradation during battery operation and a faster reaction rate compared with pre-lithiation by a stabilized lithium metal powder (SLMP) method or an electrochemical method. In addition, among the lithium direct contact methods, a dry pre-lithiation process is performed in which pre-lithiation proceeds from the time of contact between the electrode active material layer and the lithium metal and therefore pre-lithiation can proceed faster than in a wet pre-lithiation process.

In an exemplary embodiment of the present specification, the transfer stack includes a lithium metal layer. In this case, the lithium metal layer is a layer including lithium metal for pre-lithiating one surface of the negative electrode active material layer, and a commonly used Li metal foil may be used, but the present invention is not limited thereto.

In an exemplary embodiment of the present specification, a thickness of the lithium metal layer may be 0.1 μm or more and 15 μm or less, specifically 0.5 μm or more and 10 μm or less, and more specifically 0.5 μm or more and 8 μm or less, 1 μm or more and 8 μm or less, 1 μm or more and 6.2 μm or less, or 3 μm or more and 6.2 μm or less.

When the thickness of the lithium metal layer falls within the above range, the irreversible capacity during charging and discharging of the lithium secondary battery can be sufficiently compensated.

In an exemplary embodiment of the present specification, the transfer stack includes a base layer. In this case,

the base layer is an essential component for supporting a lithium metal layer during the process of preparing a transfer stack, and can be used without limitation as long as it has the characteristics of being able to withstand process conditions such as high temperatures during the step of depositing the lithium metal layer and to prevent the problem of reverse peeling, where the lithium metal layer is transferred onto the base layer during the process of transferring the lithium metal layer.

In an exemplary embodiment of the present specification, the base layer may include one or more selected from the group consisting of polyethylene terephthalate (PET), polyimide (PI), poly(methylmethacrylate) (PMMA), polypropylene, polyethylene, and polycarbonate, specifically, one or more selected from the group consisting of polyethylene terephthalate (PET), polyimide (PI), and polyethylene, and more specifically, polyethylene terephthalate (PET).

In an exemplary embodiment of the present specification, a thickness of the base layer may fall within a range of 1 μm or more and 300 μm or less, specifically 5 μm or more and 200 μm or less, and more specifically 10 μm or more and 100 μm or less.

When the thickness of the base layer falls within the above range, the transfer of the lithium metal layer to the negative electrode active material layer can occur efficiently and the reverse transfer can be prevented.

In an exemplary embodiment of the present specification, the transfer stack may be manufactured by any one of the methods of depositing, roll-pressing, and melting the lithium metal layer on one surface of the base layer. Specifically, in an exemplary embodiment of the present specification, the transfer stack including the lithium metal layer and the base layer may be manufactured by any one of the methods of depositing and roll-pressing a lithium metal layer on one surface of the base layer, and more specifically, may be manufactured by the method of depositing a lithium metal layer on one surface of the base layer.

In an exemplary embodiment of the present specification, the method for depositing the lithium metal layer to one surface of the base layer may be selected from a physical vapor deposition (PVD) method and a chemical vapor deposition (CVD) method, and among the physical vapor deposition methods, a thermal evaporation method may be mainly used. However, no such limitation is intended, and various deposition methods used in the art may be used.

In an exemplary embodiment of the present specification, the method of roll-pressing the lithium metal layer on one surface of the base layer may involve bringing a lithium foil into contact with one surface of the base layer and then forming a lithium thin film having a thickness of 15 μm or less through a continuous roll-pressing process.

That is, the transfer stack according to an exemplary embodiment of the present specification may be one in which the lithium metal layer and the base layer are sequentially stacked.

In an exemplary embodiment of the present specification, the transfer stack may further include a surface protection layer on a surface of the lithium metal layer opposite to a surface on which the base layer is positioned. The surface protection layer can prevent the lithium metal layer from being exposed to the air and oxidized before the transfer stack comes into contact with the negative electrode active material layer, thereby improving process stability.

In an exemplary embodiment of the present specification, the surface protection layer may be composed of $Li_2CO_3$.

The method for manufacturing a pre-lithiated negative electrode according to an exemplary embodiment of the present specification may further include a step of, before the step of bringing the transfer stack into contact with one surface of the negative electrode active material layer, placing the transfer stack in a vacuum chamber at $10^{-3}$ torr or below, introducing argon (Ar) gas and carbon dioxide ($CO_2$) gas at room temperature, and then purging the vacuum chamber until the vacuum level reaches atmospheric pressure, which is a step for forming the surface protection layer.

Alternatively, the step of preparing a transfer stack according to an exemplary embodiment of the present specification may further include a step of placing the transfer stack in a vacuum chamber at $10^{-3}$ torr or below, introducing argon (Ar) gas and carbon dioxide ($CO_2$) at room temperature, and then purging the vacuum chamber until the vacuum level reaches atmospheric pressure, which is a step for forming the surface protection layer.

In an exemplary embodiment of the present specification, the transfer stack may further include a release layer between the lithium metal layer and the base layer, and specifically, the lithium metal layer, the release layer, and the base layer may be sequentially stacked. In this case, the release layer serves as a means for facilitating removal of the base layer after transfer completion of the transfer stack, and can prevent the lithium metal layer from being removed together when the base layer is removed.

In an exemplary embodiment of the present specification, the release layer may include one or more selected from the group consisting of polycarbonate (PC), polydimethylsiloxane (PDMS), polymethylhydrosiloxane (PMHS), polyimide (PI), and polymethylmethacrylate (PMMA), specifically one or more selected from the group consisting of polycarbonate (PC), polydimethylsiloxane (PDMS), and polymethylmethacrylate (PMMA), and more specifically polymethylmethacrylate (PMMA).

In an exemplary embodiment of the present specification, a thickness of the release layer may be 0.1 μm or more and 5 μm or less, specifically 0.2 μm or more and 3 μm or less, and more specifically 0.5 μm or more and 1 μm or less.

In an exemplary embodiment of the present specification, when the thickness of the release layer falls within the above range, sufficient release force can be secured, and when the base layer is removed after transfer completion of the

transfer stack, the release layer may be removed together or may remain on the surface of the lithium metal layer. However, even if the release layer remains on the surface of the lithium metal layer, it does not play a role in blocking the release of heat, and thus may not accelerate the formation of by-products.

In an exemplary embodiment of the present specification, the release layer may be formed by a coating method. For example, the coating method may be a method selected from the group consisting of dip coating, spray coating, spin coating, die coating, gravure coating, micro-gravure coating, comma coating, and roll coating, but is not limited thereto, and various coating methods that can be used in the art to form a coating layer may be used.

The method for manufacturing a pre-lithiated negative electrode according to an exemplary embodiment of the present specification may further include a step of pressing the negative electrode active material layer in contact with the transfer stack after the step of bringing the transfer stack into contact with the negative electrode active material layer; and a step of removing the base layer after aging the negative electrode active material layer in contact with the transfer stack.

The method for manufacturing a pre-lithiated negative electrode according to an exemplary embodiment of the present specification may include a step of pressing the negative electrode active material layer in contact with the transfer stack, through which pre-lithiation by transfer can proceed more actively on the negative electrode active material layer, and a negative electrode can be formed thin despite high energy density.

In this case, the pressing step may be performed by bringing the transfer stack into contact with at least one surface of the negative electrode active material layer, with the lithium metal layer facing the one surface, and then performing a roll pressing process. That is, in an exemplary embodiment of the present specification, the step of pressing the negative electrode active material layer in contact with the transfer stack is a step of causing a pre-lithiation reaction to actively occur between the negative electrode active material layer and the lithium metal layer by applying a load through a roller.

In an exemplary embodiment of the present specification, the pressing step may involve applying a load of 2 $kgf/cm^2$ or more and 10 $kgf/cm^2$ or less, specifically 3 $kgf/cm^2$ or more and 8 $kgf/cm^2$ or less, and more specifically 4 $kgf/cm^2$ or more and 6 $kgf/cm^2$ or less.

In an exemplary embodiment of the present specification, when a load falling within the above range is applied, pre-lithiation by transfer can proceed more actively, and at the same time, pre-lithiation progresses within an appropriate range, thereby making it possible to minimize residual lithium on the negative electrode surface and loss of lithium introduced. In addition, the negative electrode can be formed thin despite the high energy density.

That is, the pressing step according to an exemplary embodiment of the present specification may involve bringing the transfer stack into contact with one surface or both surfaces of the negative electrode active material layer, with the lithium metal layer facing the one surface or both surfaces, and then performing transfer through a roll pressing process while applying a load within the above range. The contacting step and the pressing step may be performed sequentially or simultaneously, and there is no limitation thereto.

As an example, when the steps of bringing the transfer stack into contact with one surface of the negative electrode active material layer and pressing the negative electrode active material layer in contact with the transfer stack are performed sequentially, the pre-lithiation reaction may begin from the moment one point of the transfer stack is brought into contact with one point of one surface of the negative electrode active material layer, or the pre-lithiation reaction may begin from the moment one point of the negative electrode active material layer in contact with the transfer stack is pressed, and the contacting step and the pressing step may have a time difference of several seconds to several minutes.

As an example, when the steps of bringing the transfer stack into contact with one surface of the negative electrode active material layer and pressing the negative electrode active material layer in contact with the transfer stack are performed simultaneously, pressing at one point of the negative electrode active material layer in contact with the transfer stack may start at the same time as one point of the transfer stack is brought into contact with one point of one surface of the negative electrode active material layer, and in this case, the pre-lithiation reaction may begin from the moment the contacting and pressing begin, or may begin after several seconds to several minutes.

The method for manufacturing a pre-lithiated negative electrode according to an exemplary embodiment of the present specification may include a step of removing the base layer after aging the negative electrode active material layer in contact with the transfer stack. In this case, the aging step is a step of storing while one surface of the negative electrode active material layer reacts with the lithium metal layer to undergo pre-lithiation.

In an exemplary embodiment of the present specification, the aging step may be performed before the step of pressing the negative electrode active material layer in contact with the transfer stack, may be performed simultaneously with the pressing step, or may be performed after the pressing step, and there is no limitation thereto.

As an example, the aging may start several seconds to several minutes before pressing starts at one point of the negative electrode active material layer in contact with the transfer stack. In this case, the aging step may begin simultaneously with the contacting step of the transfer stack, or may begin within several seconds to several minutes from the contacting step. In this case, the pre-lithiation reaction may proceed before the pressing step, and the pressing step may be a step for promoting the pre-lithiation reaction.

As an example, the aging may begin simultaneously with the start of pressing at one point of the negative

electrode active material layer in contact with the transfer stack. In this case, the contacting step of the transfer stack, the pressing step, and the aging step may all begin simultaneously, or the pressing step and the aging step may begin within several seconds to several minutes from the contacting step.

As an example, the aging may begin from the moment the pressing is completed at one last point of the negative electrode active material layer in contact with the transfer stack.

In an exemplary embodiment of the present specification, the aging step may be performed at a temperature ranging from 0°C to 40°C, specifically 10°C to 30°C, and more specifically 20°C to 28°C.

In an exemplary embodiment of the present specification, the aging step may be performed at room temperature.

In the method for manufacturing a pre-lithiated negative electrode according to an exemplary embodiment of the present specification, the pre-lithiation reaction rate can be controlled within an appropriate range by adjusting the temperature range of the aging step to be within the above range.

In an exemplary embodiment of the present specification, the aging step may be performed until the pre-lithiation of one surface of the negative electrode active material layer is completed. In this case, whether the pre-lithiation has been completed can be determined by visually observing a change in color of the negative electrode surface. Specifically, it can be confirmed whether the pre-lithiation has been completed by observing that the surface of the negative electrode, which is silver like lithium metal immediately after lithium transfer, has completely changed to the inherent color (black) of the negative electrode after completion of the pre-lithiation. In this case, since the base layer is transparent, the silver color of the lithium metal or the inherent color of the negative electrode can be confirmed regardless of whether the base layer is peeled off.

The present invention can promote a chemical reaction between the negative electrode active material layer and the lithium metal layer by performing all of the step of bringing the transfer stack into contact with the negative electrode active material layer, and the pressing step, and the aging step without removing the base layer, thereby suppressing the formation of residual lithium on the electrode surface. However, if the pre-lithiation reaction proceeds without removing the base layer, the temperature of the negative electrode increases as the heat generated by the pre-lithiation is not released due to the base layer, and lithium nitride may be predominantly formed in the central region of the negative electrode surface. Therefore, as described above, by increasing the moisture content of the negative electrode active material layer to be pre-lithiated, the pre-lithiation reaction rate can be controlled, that is, the temperature can be controlled, thereby suppressing the formation of lithium nitride.

The method for manufacturing a pre-lithiated negative electrode according to an exemplary embodiment of the present specification may include a step of removing the base layer from the transfer stack after the aging step.

In an exemplary embodiment of the present specification, the step of removing the base layer may be performed after the pre-lithiation of one surface of the negative electrode active material layer is completed.

In an exemplary embodiment of the present specification, the pre-lithiation may be a process in which a pre-lithiation reaction begins between the negative electrode active material layer and the lithium metal layer from a point in time at which the lithium metal layer comes into contact with one surface of the negative electrode active material layer, within several seconds to several minutes after the contact of the lithium metal layer, or from a point in time at which the base layer is removed.

In an exemplary embodiment of the present specification, the pre-lithiation reaction may be completed within several days, within 24 hours, or within several seconds to several minutes from the point in time at which the lithium metal layer comes into contact with one surface of the negative electrode active material layer.

**<Negative Electrode Active Material Layer>**

The step of preparing a negative electrode including a negative electrode active material layer having a moisture content of 800 ppm or more and provided on at least one surface of the negative electrode current collector layer according to an exemplary embodiment of the present specification may further include a step of providing a negative electrode active material layer on at least one surface of the negative electrode current collector layer before a step of increasing a moisture content of the negative electrode active material layer by storing at a relative humidity of 2% or more and 20% or less, and the step of providing a negative electrode active material layer on at least one surface of the negative electrode current collector layer may include a step of forming the negative electrode active material layer by applying and drying a negative electrode slurry on at least one surface of the negative electrode current collector layer.

In an exemplary embodiment of the present specification, the negative electrode slurry may include a negative electrode active material layer composition and a slurry solvent.

In an exemplary embodiment of the present specification, a solid content of the negative electrode slurry may fall within a range of 5% or more and 40% or less, specifically 7% or more and 35% or less, and more specifically 10% or more and 30% or less.

The solid content of the negative electrode slurry may refer to a content of the negative electrode active material layer composition included in the negative electrode slurry, and may refer to a content of the negative electrode active

material composition based on 100 parts by weight of the negative electrode slurry. When the solid content of the negative electrode slurry falls within the specified range, an appropriate viscosity is secured when forming a negative electrode active material layer, thereby minimizing particle agglomeration of the negative electrode active material layer composition and enabling efficient formation of the negative electrode active material layer.

In an exemplary embodiment of the present specification, the slurry solvent is not limited thereto as long as it can dissolve the negative electrode active material layer composition. For example, the slurry solvent may be water (e.g., distilled water) or NMP.

According to an exemplary embodiment of the present specification, the negative electrode active material layer may be formed by applying and drying the negative electrode slurry on the negative electrode current collector layer, and through the drying step, the slurry solvent in the negative electrode slurry may be dried.

In an exemplary embodiment of the present specification, the negative electrode active material layer composition may include a negative electrode active material described below; a negative electrode conductive material; and a negative electrode binder, and the negative electrode active material may include one or more of a carbon-based active material and a silicon-based active material.

In other words, the negative electrode active material layer according to an exemplary embodiment of the present specification may include one or more of a carbon-based active material and a silicon-based active material as the negative electrode active material.

In an exemplary embodiment of the present specification, the negative electrode active material layer may include one or more of a carbon-based active material and a silicon-based active material as the negative electrode active material, and the silicon-based active material may include one or more selected from the group consisting of Si, silicon oxide, Si/C, and a Si alloy.

Specifically, in an exemplary embodiment of the present specification, the silicon-based active material may include one or more selected from the group consisting of Si and silicon oxide, and more specifically, the silicon-based active material may include Si.

In an exemplary embodiment of the present specification, for the silicon-based active material, pure silicon (Si) may be particularly used as the silicon-based active material. Using pure silicon (Si) as a silicon-based active material may mean that, based on 100 parts by weight of the total silicon-based active material as described above, pure Si particles, which are not combined with other particles or elements, are included within the above range.

In an exemplary embodiment of the present specification, an average particle diameter ($D_{50}$) of the silicon-based active material may be 1 μm to 10 μm, specifically 2 μm to 8 μm, and more specifically 3 μm to 7 μm. When the average particle diameter ($D_{50}$) is below the lower limit of the above range, the specific surface area of the silicon-based active material may increase excessively, causing the viscosity of the negative electrode slurry to increase excessively, and as a result, the particles constituting the negative electrode slurry may not be dispersed smoothly. In addition, when the average particle diameter ($D_{50}$) of the silicon-based active material is excessively small, the contact area between the negative electrode active material and the conductive material by a composite composed of the conductive material and the binder in the negative electrode slurry is reduced, so the likelihood of disconnection of the conductive network is increased, which may decrease the capacity retention rate. On the other hand, when the average particle diameter ($D_{50}$) exceeds the upper limit of the above range, excessively large silicon-based active materials are present, making the surface of the negative electrode uneven and possibly causing non-uniform current density during charging and discharging. In addition, when the average particle diameter ($D_{50}$) of the silicon-based active material is excessively large, the phase stability of the negative electrode slurry becomes unstable, which may result in a decrease in processability and a decrease in the capacity retention rate of the battery.

Note that since the silicon-based active material has a significantly higher capacity than that of graphite-based active materials used in the related art, attempts to apply it are increasing, but the volume expansion rate thereof is high during the charging and discharging, which reduces the life of the battery. Therefore, in order to suppress this, the negative electrode active material according to an exemplary embodiment of the present specification may use the silicon-based active material and the carbon-based active material in combination.

In an exemplary embodiment of the present specification, the carbon-based active material may include one or more selected from the group consisting of graphite such as natural graphite or artificial graphite, carbon fiber, non-graphitizable carbon, carbon black, carbon nanotubes, fullerene, and activated carbon, and specifically, may include one or more selected from the group consisting of natural graphite and artificial graphite.

When the carbon-based active material is used as the negative electrode active material according to an exemplary embodiment of the present specification, reversible intercalation and deintercalation of lithium ions are possible, and structural and electrical properties can be maintained. Among these, graphite-based active materials can ensure the life characteristics of batteries due to their excellent reversibility. Since the graphite-based active material has a low discharge voltage of -0.2 V with respect to lithium, a battery using the graphite-based active material can exhibit a high discharge voltage of 3.6 V, and thus can provide many advantages in terms of energy density of a lithium secondary battery.

In an exemplary embodiment of the present specification, when artificial graphite is used as the carbon-based active material, the orientation degree is relatively low during electrode press-rolling, enabling favorable lithium ion intercalation/deintercalation characteristics. Therefore, the rapid charging performance of the battery is excellent, and the degree of expansion due to charging and discharging is low, enabling excellent lifetime characteristics.

In an exemplary embodiment of the present specification, when natural graphite is used as the carbon-based active material, the output and capacity of the lithium secondary battery are improved, and the excellent adhesion allows a reduced amount of binder used or the like, thereby enabling the realization of a high-capacity, high-density negative electrode. The natural graphite may be generally in the form of plate-like agglomerates before being processed, and the plate-like particles may be manufactured in the form of a sphere having a smooth surface through post-treatment processing such as particle pulverization and re-assembly process for use as an active material for manufacture of an electrode.

In an exemplary embodiment of the present specification, the negative electrode active material layer may include a carbon-based active material and a silicon-based active material as the negative electrode active material, the carbon-based active material may include one or more selected from the group consisting of natural graphite and artificial graphite, and the silicon-based active material may include Si.

In an exemplary embodiment of the present specification, the negative electrode active material layer may include a carbon-based active material and a silicon-based active material as the negative electrode active materials, and the silicon-based active material may be included in an amount of 60 parts by weight or less, specifically 55 parts by weight or less, and more specifically 50 parts by weight or less, with respect to 100 parts by weight of the total negative electrode active material.

In an exemplary embodiment of the present specification, the negative electrode active material may include the carbon-based active material and the silicon-based active material in a weight ratio of 95:5 to 30:70, specifically 90:10 to 40:60, and more specifically 85:15 to 45:55, 80:20 to 50:50, or 70:30 to 55:45.

By using the carbon-based active material in an amount equal to or greater than that of the silicon-based active material, a reduction in life due to the battery expansion during charging and discharging can be minimized while securing a high capacity attributable to the high specific capacity of the silicon-based active material.

In an exemplary embodiment of the present specification, the negative electrode active material may be included in an amount of 60 parts by weight or more and 99 parts by weight or less, specifically, 70 parts by weight or more and 98 parts by weight or less, and more specifically, 80 parts by weight or more and 97 parts by weight or less, based on 100 parts by weight of the negative electrode active material layer composition.

In an exemplary embodiment of the present specification, the negative electrode conductive material is not particularly limited as long as it has conductivity without causing a chemical change in the battery. For example, graphite such as natural graphite or artificial graphite; carbon black such as acetylene black, Ketjen black, channel black, furnace black, lamp black, and thermal black; a conductive fiber such as a carbon fiber or a metal fiber; a conductive tube such as a carbon nanotube; metal powder such as fluorocarbon, aluminum, and nickel powders; a conductive whisker such as zinc oxide and potassium titanate; a conductive metal oxide such as titanium oxide; or a conductive material such as a polyphenylene derivative may be used.

Specifically, as the negative electrode conductive material according to an exemplary embodiment of the present specification, a linear conductive material may be used, and more specifically, a single-walled CNT may be used.

In an exemplary embodiment of the present invention, the content of the negative electrode conductive material may be 0.01 to 30 parts by weight, specifically 0.1 to 25 parts by weight, and more specifically 0.1 to 10 parts by weight, with respect to 100 parts by weight of the negative electrode active material layer composition.

In an exemplary embodiment of the present specification, the negative electrode binder may serve to improve adhesion between negative electrode active material particles and adhesive strength between the negative electrode active material particles and the negative electrode current collector. The negative electrode binder may be one known in the art, and non-limiting examples thereof include at least one selected from the group consisting of polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, tetrafluoroethylene, polyethylene, polypropylene, polyacrylic acid, ethylene-propylene-diene monomer (EPDM), sulfonated EPDM, styrene butadiene rubber (SBR), fluoro rubber, polyacrylamide, and materials in which hydrogen of these is substituted with Li, Na, Ca, or the like, and may also include various copolymers thereof.

In particular, the negative electrode binder according to an exemplary embodiment of the present specification serves to support the negative electrode active material and the negative electrode conductive material in order to prevent distortion and structural deformation of the negative electrode structure during the volume expansion and relaxation of the silicon-based active material. All general negative electrode binders satisfying the above-described role can be applied, specifically, a styrene-butadiene rubber (SBR) and polyacrylamide (PAM) may be used.

In an exemplary embodiment of the present invention, the content of the negative electrode binder may be 1 to 30 parts by weight, specifically 3 to 20 parts by weight, and more specifically 4 to 10 parts by weight, with respect to 100 parts

by weight of the negative electrode active material layer composition.

In an exemplary embodiment of the present specification, the negative electrode active material layer composition may further include a dispersant.

In an exemplary embodiment of the present specification, the dispersant serves as an additive that helps uniform dispersion of the negative electrode active material or the negative electrode conductive material, and any commonly used dispersant may be applied as long as the above role is satisfied. Specifically, one or more selected from the group consisting of carboxymethyl cellulose (CMC), polyacrylic acid (PAA), polyethylene oxide (PEO), polyvinylpyrrolidone (PVP), and styrene-butadiene rubber (SBR) may be used, and more specifically, carboxymethyl cellulose (CMC) may be used.

In an exemplary embodiment of the present specification, the dispersant may be included in an amount of 0.01 parts by weight or more and 10 parts by weight or less, specifically, 0.1 parts by weight or more and 5 parts by weight or less, and more specifically, 0.2 parts by weight or more and 3 parts by weight or less, based on 100 parts by weight of the total negative electrode active material layer composition. When the content of the dispersant falls within the above range, dispersion stability can be improved.

In an exemplary embodiment of the present specification, the negative electrode current collector layer may generally have a thickness of 1 μm to 100 μm, specifically 5 μm to 50 μm, and more specifically 8 μm to 30 μm. The negative electrode current collector layer is not particularly limited as long as it has high conductivity without causing a chemical change in the battery, and for example, copper, stainless steel, aluminum, nickel, titanium, fired carbon, copper or stainless steel surface-treated with carbon, nickel, titanium, silver, or the like, an aluminum-cadmium alloy, and the like may be used. In addition, the negative electrode current collector layer may have microscopic irregularities formed on a surface to enhance a bonding force of the negative electrode active material, and may be used in various forms such as a film, a sheet, a foil, a net, a porous body, a foamed body, or a non-woven fabric body.

**<Lithium Secondary Battery>**

A lithium secondary battery according to an exemplary embodiment of the present specification may include a positive electrode; a pre-lithiated negative electrode manufactured by the above-described manufacturing method; a separator; and an electrolyte solution. The positive electrode, the separator, and the electrolyte solution may be used without limitation as long as they are known in the art within the scope to which the above-described description applies.

The lithium loss (%) calculated according to the above formula L of the pre-lithiated negative electrode manufactured by the manufacturing method according to an exemplary embodiment of the present specification may be 40% or less, specifically 35% or less, and more specifically 30% or less, 25% or less, or 22.4% or less.

In the present specification, the lithium loss (%) refers to a percentage representing a relative amount ($mAh/cm^2$) of lithium, which is lost without being used during pre-lithiation, of a total amount ($mAh/cm^2$) of lithium to be intercalated into an electrode through actual pre-lithiation, and the range of the lithium loss (%) indicates that the formation of by-products during pre-lithiation is suppressed by controlling the moisture content of the negative electrode active material layer by the manufacturing method according to an exemplary embodiment of the present specification.

In addition, the area (%) of the lithium byproduct-concentrated formation region on the surface of the pre-lithiated negative electrode manufactured by the manufacturing method according to an exemplary embodiment of the present specification may be 50% or less, specifically 40% or less, and more specifically 30% or less, 25% or less, or 22% or less.

In the present specification, the area (%) of the lithium by-product-concentrated formation region may be expressed as a percentage of the area of the by-product-concentrated formation region with respect to the total area of an uncoated portion having the negative electrode active material layer of the pre-lithiated negative electrode, and the region in which the by-product is concentrated may be distinguished as a region in which nitrogen (N) appears at a level of about 12% based on peaks in XPS analysis. The range of the area (%) of the lithium by-product- concentrated formation region also shows that the formation of by-products during pre-lithiation is suppressed by controlling the moisture content of the negative electrode active material layer by the manufacturing method according to an exemplary embodiment of the present specification.

According to another exemplary embodiment of the present specification, a battery module or a battery pack including the lithium secondary battery may be provided.

According to another exemplary embodiment of the present specification, a battery pack including the battery module may be provided.

According to another exemplary embodiment of the present specification, a battery module including the lithium secondary battery as a unit cell, a battery pack including the same, and a battery pack including the lithium secondary battery may be provided. Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

[Best Mode]

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

**<Preparation Example>**

**Example 1-1**

**<Preparation of Negative Electrode Active Material Layer>**

A negative electrode slurry was prepared by including 35 kg (94.75 parts by weight) of Si and graphite in a ratio of 30:70 as negative electrode active materials, 0.94 kg (2.54 parts by weight) of SBR (styrene butadiene rubber) and 0.87 kg (2.36 parts by weight) of PAM (polyacrylamide) as binders, and further including 0.08 kg (0.22 parts by weight) of a dispersant and 0.05 kg (0.13 parts by weight) of single-walled CNTs.

The negative electrode slurry was coated on a copper foil (thickness: 8 μm) to have a capacity of 3.78 mAh/cm$^2$ per unit area and dried, which was then stored for one day under conditions of a relative humidity of 6% (a dry room at a dew point temperature of -15°C) to prepare a negative electrode active material layer having a moisture content of 1200 ppm.

**<Preparation of Transfer stack>**

A transfer stack was prepared by coating, on one surface of a polyethylene terephthalate (PET) base layer, a solution containing polymethyl methacrylate (PMMA) to form a release layer, and depositing a lithium metal layer (thickness: 6.2 μm) on an upper portion thereof by a physical vapor deposition (PVD) method.

Thereafter, after the transfer stack was placed in a vacuum chamber at $10^{-3}$ torr or below, argon (Ar) gas and carbon dioxide ($CO_2$) gas were introduced at room temperature, and then the vacuum chamber was purged until the vacuum level reached atmospheric pressure, resulting in additional formation of a surface protection layer including $Li_2CO_3$ on the lithium metal layer.

**<Preparation of Pre-lithiated Negative Electrode>**

In a dry room, the transfer stack was brought into contact with the upper portion of the negative electrode active material layer (specifically, the surface protection layer was brought into contact with the negative electrode active material layer), with the lithium metal layer facing the upper portion, and pressed at a pressure of 4.2 kgf/cm$^2$. Aging was subsequently performed at 25°C without peeling off the base layer until pre-lithiation was completed, thereby preparing a pre-lithiated negative electrode having a capacity of 0.838 mAh/cm$^2$.

In this case, whether the pre-lithiation was completed was checked by observing that the color of the surface of the negative electrode, which was silver, had completely changed to black due to the transfer of the lithium metal layer.

**<Preparation of Negative Electrode Half-Cell>**

An electrode assembly was prepared by using the negative electrode prepared as described above as a working electrode, using a 100 μm-thick lithium metal thin film cut into a circular shape of 1.7671 cm$^2$ as a counter electrode, and interposing a polyethylene separator between the working electrode and the counter electrode.

In addition, an electrolyte solution was prepared by adding $LiPF_6$ as a lithium salt at a concentration of 1.0 M to an organic solvent in which ethylene carbonate (EC), ethyl methyl carbonate (EMC), and diethyl carbonate (DEC) were mixed in a volume ratio of 20:10:70.

The electrode assembly was accommodated into a coin-type case, and the prepared electrolyte solution was injected to prepare a coin-type negative electrode half-cell of Example 1-1.

**Example 2-1**

A pre-lithiated negative electrode and a half-cell of Example 2-1 were prepared in the same manner as in Example 1-1, except that a negative electrode active material layer including Si and graphite in a ratio of 50:50 as negative electrode active materials and having a moisture content of 3000 ppm after being stored for one day under conditions of a relative humidity of 9.6% (a dry room at a dew point temperature of -8.2°C) was prepared, and then pre-lithiation was

performed using a transfer stack including a lithium metal layer having a thickness of 3 μm.

**Comparative Example 1-1**

A pre-lithiated negative electrode and a half-cell of Comparative Example 1-1 were prepared in the same manner as in Example 1-1, except that the negative electrode slurry was coated on a copper foil (thickness: 8 μm) to have a capacity of 3.78 mAh/cm$^2$ per unit area and dried, which was then stored for one day under conditions of a relative humidity of less than 1% (a dry room at a dew point temperature of -34°C) to prepare a negative electrode active material layer having a moisture content of 300 ppm.

**Comparative Example 1-2**

A pre-lithiated negative electrode and a half-cell of Comparative Example 1-2 were prepared in the same manner as the negative electrode of Comparative Example 1-1, except that plasma treatment was additionally performed on the negative electrode active material layer of Comparative Example 1-1.

**Comparative Example 2-1**

A pre-lithiated negative electrode and a half-cell of Comparative Example 2-1 were prepared in the same manner as in Example 2-1, except that a negative electrode active material layer having a moisture content of 150 ppm after being stored for one day under conditions of a relative humidity of 0.1% (a dry room at a dew point temperature of -50°C) was prepared.

**Experimental Example 1: Comparison of Example 1-1 and Comparative Examples 1-1 and 1-2**

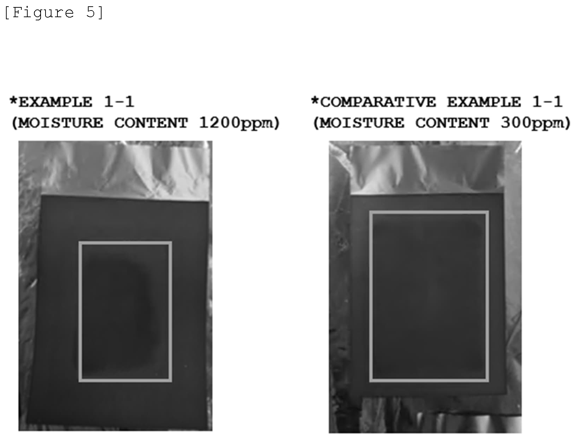

For the pre-lithiated negative electrodes of Example 1-1 and Comparative Example 1-1 using the same negative electrode active material, an image of the negative electrode, in which the lithium metal layer was transferred onto the negative electrode active material layer, was photographed (imaging device: digital camera (SONY A6000)) to calculate the area ratio (%) of the by-product-concentrated formation region, and the results are shown in FIG. 5.

Referring to FIG. 5, the central portion (indicated by a gray box) appearing dark in a rectangular shape, unlike the peripheral portion of the negative electrode surface, is identified as a region in which lithium by-products are concentrated (a region where nitrogen (N) appears at a level of about 12% based on peaks in XPS analysis, see FIG. 4). The by-product-concentrated formation region (%) is a percentage representing a ratio of the area of the by-product-concentrated formation region (a dark region appearing in the central portion of the negative electrode in FIG. 3, which is a region where nitrogen (N) appears at a level of about 12% based on peaks in XPS analysis) with respect to the total area of the negative electrode (i.e., a black region coated with the negative electrode active material layer and pre-lithiated, excluding the uncoated portion in FIG. 3), and is shown in Table 1 below.

In addition, for the negative electrodes of Example 1-1 and Comparative Examples 1-1 and 1-2, the moisture content of the negative electrode active material layer, the charge and discharge capacities, and the lithium loss (%) were measured and calculated, respectively, and the results are shown in Table 1 below.

The moisture content was measured using a Karl Fischer moisture measuring unit. Specifically, a sample (0.5 g to 1 g) of the negative electrode active material layer having an area of 3 cm × 4 cm was taken, placed in a test container for moisture evaluation in a dry room, and sealed. Thereafter, the sample was placed in a measuring oven, the target temperature was set to 150°C such that generated moisture was transferred to a Karl Fischer moisture measuring unit, and the moisture content was measured.

[Formula M]

$$M = (A - B)/C$$

In Formula M above,

M is a moisture content (ppm), A is a measured moisture content (μg), B is a measured moisture content without sample (μg), and C is a measured sample amount (g).

The charge and discharge capacities were measured after one cycle in which each negative electrode half-cell was charged to 0.005 V at 0.1C under CC/CV (0.005C cut-off) and discharged to 1.5 V at 0.1C under CC using an electrochemical charge/discharge device, and the lithium loss (%) was calculated according to Formula L below.

lithium loss (%) = 100 - [{(charge capacity of (pristine) negative electrode half-cell without pre-lithiation) - (charge capacity of negative electrode half-cell with pre-lithiation)}/(measured capacity of lithium metal layer) x 100]% [Formula L]

In this case, the negative electrode half-cell without pre-lithiation (pristine) refers to a negative electrode half-cell prepared in the same manner as the negative electrode half-cells of Example 1-1 and Comparative Examples 1-1 and 1-2, except that pre-lithiation is not applied. The negative electrode half-cell without pre-lithiation (pristine) prepared in the same manner as in Example 1-1 is denoted as pristine A, and the negative electrode half-cells without pre-lithiation (pristine) prepared in the same manner as in Comparative Examples 1-1 and 1-2 are denoted as pristine B and pristine C, respectively.

The measured capacity of the lithium metal layer was obtained by separately preparing a half-cell, in which the same lithium metal layer as that used in the transfer stacks of Example 1 and Comparative Examples 1 and 2 was transferred onto a Cu foil and a lithium metal thin film was used as a counter electrode, and performing one discharge to 1 V at 0.1C under CC, and the measured capacity was 0.476 mAh/cm$^2$.

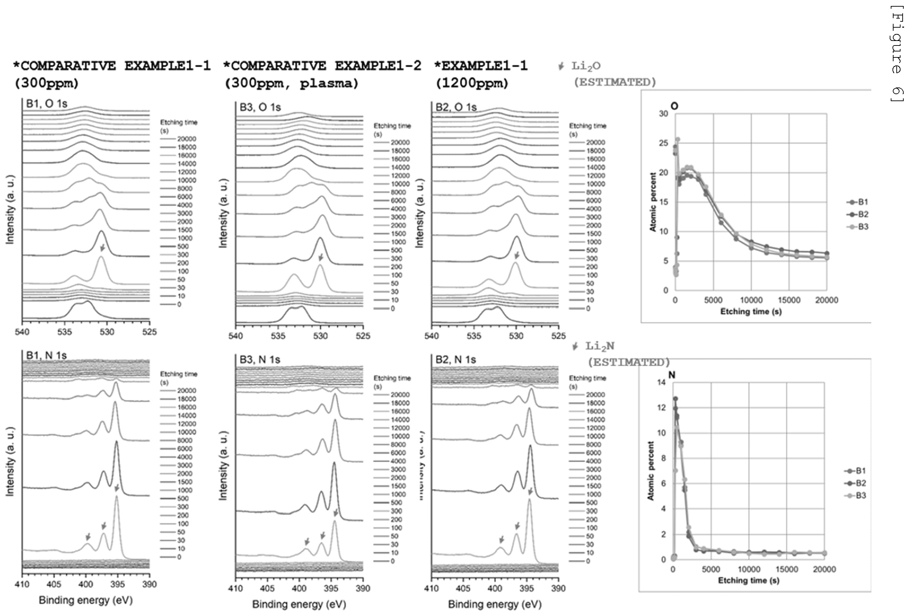

Note that, for the negative electrode half-cell of Comparative Example 1-2 in which plasma treatment was further performed on the negative electrode active material layer having a moisture content of 300 ppm, in order to confirm whether the degree or composition of by-product formation is affected by the plasma treatment, XPS analysis was performed on the by-product-concentrated formation regions on the negative electrode surfaces of Example 1-1, Comparative Example 1-1, and Comparative Example 1-2, and the results are shown in FIG. 6.

[Table 1]

| | Moisture content (ppm) | Charge capacity (mAh/cm$^2$) | Discharge capacity (mAh/cm$^2$) | By-product-concentrated formation area (%) | Lithium loss (%) |
|---|---|---|---|---|---|
| Pristine A | 1200 | 4.480 | 3.606 | - | - |
| Example 1-1 | | 4.110 | 3.600 | 21.76 | 22.38 |
| Pristine B | 300 | 4.479 | 3.606 | - | - |
| Comparative Example 1-1 | | 4.195 | 3.671 | 50.36 | 40.31 |
| Pristine C | 300 | 4.479 | 3.606 | - | - |
| Comparative Example 1-2 | | 4.195 | 3.671 | 50.36 | 40.31 |

According to Table 1 above, it was confirmed that, although the same negative electrode active material was used, the negative electrode half-cell of Example 1-1, in which the moisture content of the negative electrode active material layer was high such as 1200 ppm, exhibited significantly less formation of by-products (lithium nitride) than those of Comparative Examples 1-1 and 1-2 in which the moisture content was low such as 300 ppm, and also exhibited a lithium loss (%) of nearly half those of Comparative Examples 1-1 and 1-2. This indicates that, as the moisture content of the negative electrode active material layer is increased, a lithium oxide layer formed by a reaction between the lithium metal layer and moisture during pre-lithiation is sufficiently formed, and the lithium oxide layer serves as a buffer for the pre-lithiation reaction rate.

In particular, it was also confirmed from FIG. 6 that the composition of the by-product-concentrated formation region does not significantly differ depending on whether plasma treatment is performed, and it can be understood that ultimately it is important to suppress the degree of by-product formation by controlling the moisture content.

**Experimental Example 2: Comparison of Example 2-1 and Comparative Example 2-1**

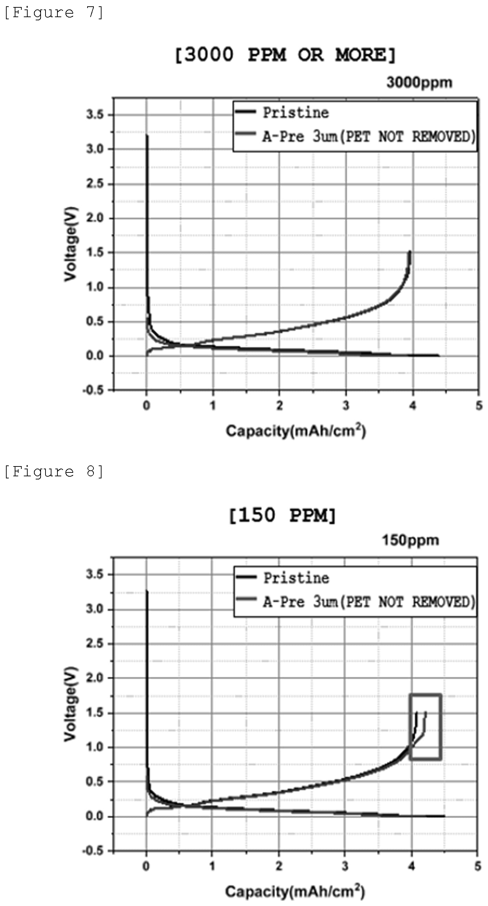

For the negative electrodes of Example 2-1 and Comparative Example 2-1 using the same negative electrode active material, the area ratio (%) of the by-product-concentrated formation region, the moisture content of the negative electrode active material layer, the charge and discharge capacities, and the lithium loss (%) were respectively measured and calculated in the same manner as in Experimental Example 1, and the results are shown in Table 2 below and FIGS. 7 and 8.

In this case, the negative electrode half-cells without pre-lithiation (pristine) prepared in the same manner as the negative electrode half-cells of Example 2-1 and Comparative Example 2-1, except that pre-lithiation is not applied, are denoted as pristine D and pristine E, respectively, and the measured capacity of the lithium metal layer used in the transfer stacks of Example 2-1 and Comparative Example 2-1 was 0.560 mAh/cm$^2$.

[Table 2]

| | Moisture content (ppm) | Charge capacity (mAh/cm$^2$) | Discharge capacity (mAh/cm$^2$) | Lithium loss (%) |
|---|---|---|---|---|
| Pristine D | 3000 | 4.388 | 3.960 | - |
| Example 2-1 | | 3.913 | 3.943 | 15.07 |
| Pristine E | 150 | 4.494 | 4.077 | - |
| Comparative Example 2-1 | | 4.205 | 4.205 | 48.36 |

According to Table 2 above, it was confirmed that, although the same negative electrode active material was used, the negative electrode half-cell of Example 2-1, in which the moisture content of the negative electrode active material layer was high such as 3000 ppm, exhibited a lithium loss (%) clearly reduced by a half or more compared with that of Comparative Example 2-1 in which the moisture content was low such as 150 ppm. However, it was confirmed that since the moisture content was considerably high such as 3000 ppm, the initial discharge capacity was slightly reduced, indicating the need to secure an appropriate moisture content of the negative electrode active material layer.

FIGS. 7 and 8 are diagrams showing charge/discharge graphs of Example 2-1 and Comparative Example 2-1 of the present invention. Referring to FIGS. 7 and 8, it can be confirmed that the nitride decomposition peak (refer to the square mark in FIG. 8) appearing in the graph of Comparative Example 2-1 is absent in the graph of Example 2-1. This indicates that the formation of lithium nitride is suppressed as the moisture content increases.

In conclusion, when the moisture content of the negative electrode active material layer is increased to 800 ppm or more according to an exemplary embodiment of the present specification, a lithium oxide layer formed by a reaction between the lithium metal layer and the moisture of the negative electrode active material layer during pre-lithiation can be sufficiently formed, and the lithium oxide layer serves as a buffer for the pre-lithiation reaction rate, thereby suppressing the formation of lithium nitride that may lead to lithium loss.

## Claims

**1.** A method for manufacturing a pre-lithiated negative electrode, comprising:

preparing a negative electrode comprising a negative electrode active material layer having a moisture content of 800 ppm or more and provided on at least one surface of a negative electrode current collector layer; and
bringing a transfer stack comprising a lithium metal layer and a base layer into contact with one surface of the negative electrode active material layer, with the lithium metal layer facing the one surface.

**2.** The method of claim 1, wherein

the bringing a transfer stack comprising a lithium metal layer and a base layer into contact with one surface of the negative electrode active material layer, with the lithium metal layer facing the one surface comprises
forming a lithium oxide layer by a reaction between moisture of the negative electrode active material layer and the lithium metal layer.

**3.** The method of claim 1, wherein

the preparing a negative electrode comprising a negative electrode active material layer having a moisture content of 800 ppm or more and provided on at least one surface of a negative electrode current collector layer comprises
providing a negative electrode active material layer on at least one surface of the negative electrode current collector layer, and
storing the negative electrode active material layer provided on at least one surface of the negative electrode current collector layer at a relative humidity of 2% or more and 20% or less to increase the moisture content of the negative electrode active material layer.

**4.** The method of claim 1, further comprising

after bringing the transfer stack into contact with one surface of the negative electrode active material layer,

pressing the negative electrode active material layer in contact with the transfer stack; and
removing the base layer after aging the negative electrode active material layer in contact with the transfer stack.

**5.** The method of claim 4, wherein the aging is performed until pre-lithiation of one surface of the negative electrode active material layer is completed.

**6.** The method of claim 1, wherein the moisture content of the negative electrode active material layer is 1000 ppm or more and 3000 ppm or less.

**7.** The method of claim 1, wherein a thickness of the lithium metal layer included in the transfer stack is 0.1 μm or more and 15 μm or less.

**8.** The method of claim 1, wherein the transfer stack further comprises a surface protection layer on a surface of the lithium metal layer opposite to a surface on which the base layer is positioned.

**9.** The method of claim 1, further comprising:

before bringing the transfer stack into contact with one surface of the negative electrode active material layer, placing the transfer stack in a vacuum chamber at $10^{-3}$ torr or below, introducing argon (Ar) gas and carbon dioxide ($CO_2$) gas at room temperature, and then purging the vacuum chamber until a vacuum level reaches atmospheric pressure.

**10.** A lithium secondary battery comprising:

a positive electrode;
a pre-lithiated negative electrode manufactured by the method of any one of claims 1 to 9;
a separator; and
an electrolyte solution.

**11.** A battery module comprising the lithium secondary battery of claim 10.

**12.** A battery pack comprising the lithium secondary battery of claim 10.

**13.** A battery pack comprising the battery module of claim 11.

[Figure 1]

(a)
START
PREPARE NEGATIVE ELECTRODE INCLUDING NEGATIVE ELECTRODE ACTIVE MATERIAL LAYER HAVING MOISTURE CONTENT OF 800 PPM OR MORE AND PROVIDED ON ONE SURFACE OF NEGATIVE ELECTRODE CURRENT COLLECTOR LAYER
S1
BRING TRANSFER STACK INCLUDING LITHIUM METAL LAYER AND BASE LAYER INTO CONTACT WITH ONE SURFACE OF NEGATIVE ELECTRODE ACTIVE MATERIAL LAYER, WITH LITHIUM METAL LAYER FACING ONE SURFACE
S2
END
(b)
START
PREPARE TRANSFER STACK INCLUDING LITHIUM METAL LAYER AND BASE LAYER
S0
PREPARE NEGATIVE ELECTRODE INCLUDING NEGATIVE ELECTRODE ACTIVE MATERIAL LAYER HAVING MOISTURE CONTENT OF 800 PPM OR MORE AND PROVIDED ON ONE SURFACE OF NEGATIVE ELECTRODE CURRENT COLLECTOR LAYER
S1
BRING TRANSFER STACK INCLUDING LITHIUM METAL LAYER AND BASE LAYER INTO CONTACT WITH ONE SURFACE OF NEGATIVE ELECTRODE ACTIVE MATERIAL LAYER, WITH LITHIUM METAL LAYER FACING THE ONE SURFACE
S2
PRESS NEGATIVE ELECTRODE ACTIVE MATERIAL LAYER IN CONTACT WITH TRANSFER STACK
S3
REMOVE BASE LAYER AFTER AGING
S4
END

[Figure 2]

(a)
Li Metal
$H_2O$ in Electrode
Electrode
Li Metal
LiOH, $Li_2O$, $Li_2CO_3$
(LITHIUM OXIDE LAYER)
Electrode
Li Metal
Low-rate
Pre-Lithiation
Electrode

(b)
Li Metal
$H_2O$ in Electrode
Electrode
Li Metal
LiOH, $Li_2O$, $Li_2CO_3$
Electrode
Li Metal
High-rate
Pre-Lithiation
Electrode

[Figure 3]

[Figure 4]

*PERIPHERAL REGION
*PERIPHERAL REGION
*CENTRAL REGION
A1, O 1s
A2, O 1s
A3, O 1s
$Li_2O$
A1, N 1s
A2, N 1s
A3, N 1s
$Li_3N$
Intensity (a. u.)
Binding energy (eV)
Etching time (s)
O
N
Atomic percent
Etching time (s)
A1
A2
A3

[Figure 5]

*EXAMPLE 1-1
(MOISTURE CONTENT 1200ppm)

*COMPARATIVE EXAMPLE 1-1
(MOISTURE CONTENT 300ppm)

[Figure 6]

*COMPARATIVE EXAMPLE1-1
(300ppm)
*COMPARATIVE EXAMPLE1-2
(300ppm, plasma)
*EXAMPLE1-1
(1200ppm)
Li2O
(ESTIMATED)
Li2N
(ESTIMATED)
B1, O 1s
B3, O 1s
B2, O 1s
B1, N 1s
B3, N 1s
B2, N 1s
Intensity (a. u.)
Binding energy (eV)
Etching time (s)
Atomic percent
O
N
B1
B2
B3

[Figure 7]

[3000 PPM OR MORE]

3000ppm
Pristine
A-Pre 3um(PET NOT REMOVED)
Voltage(V)
Capacity(mAh/cm2)

[Figure 8]

[150 PPM]

150ppm
Pristine
A-Pre 3um(PET NOT REMOVED)
Voltage(V)
Capacity(mAh/cm2)

**TRANSLATION**

## INTERNATIONAL SEARCH REPORT

International application No. **PCT/KR2025/019126**

**A. CLASSIFICATION OF SUBJECT MATTER**

**H01M 4/04**(2006.01)i; **H01M 4/1395**(2010.01)i; **H01M 10/42**(2006.01)i; **H01M 10/052**(2010.01)i; **H01M 50/204**(2021.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/04(2006.01); H01G 11/22(2013.01); H01M 10/052(2010.01); H01M 10/0525(2010.01); H01M 10/42(2006.01); H01M 4/08(2006.01); H01M 4/134(2010.01); H01M 4/139(2010.01); H01M 4/1395(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (MOIP internal) & keywords: 전리튬화 (prelithiation), 음극 (anode), 수분함량 (moisture content), 리튬 금속 (Li metal), 기재층 (substrate), 보호층 (protective layer), 전사적층체 (transfer laminate)

**C. DOCUMENTS CONSIDERED TO BE RELEVANT**

| Category* | Citation of document, with indication, where appropriate, of the relevant passages | Relevant to claim No. |
|---|---|---|
| A | KR 10-2024-0000400 A (LG ENERGY SOLUTION, LTD.) 02 January 2024 (2024-01-02) abstract; paragraphs [0145], [0147]-[0157]; table 1; claim 10 | 1-13 |
| A | JP 2013-020974 A (PANASONIC CORP.) 31 January 2013 (2013-01-31) abstract; claims 1-3 | 1-13 |
| A | KR 10-2005-0019483 A (SAMSUNG SDI CO., LTD.) 03 March 2005 (2005-03-03) abstract; claims 1-20 | 1-13 |
| A | KR 10-2023-0038702 A (SOLVAY SPECIALTY POLYMERS ITALY S.P.A.) 21 March 2023 (2023-03-21) abstract; claims 1-14 | 1-13 |
| A | KR 10-2021-0124887 A (CHINA ENERGY CAS TECHNOLOGY CO., LTD.) 15 October 2021 (2021-10-15) abstract; claims 1-14 | 1-13 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 March 2026** | **07 March 2026** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

TRANSLATION

**INTERNATIONAL SEARCH REPORT**
**Information on patent family members**

International application No.
**PCT/KR2025/019126**

| Patent document cited in search report | Publication date (day/month/year) | Patent family member(s) | Publication date (day/month/year) |
|---|---|---|---|
| KR 10-2024-0000400 A | 02 January 2024 | CN 118476053 A | 09 August 2024 |
| | | EP 4447145 A1 | 16 October 2024 |
| | | JP 2025-501277 A | 17 January 2025 |
| | | US 2025-0096247 A1 | 20 March 2025 |
| | | WO 2023-249442 A1 | 28 December 2023 |
| JP 2013-020974 A | 31 January 2013 | JP 2007-273459 A | 18 October 2007 |
| | | JP 5151188 B2 | 27 February 2013 |
| | | JP 5476612 B2 | 23 April 2014 |
| KR 10-2005-0019483 A | 03 March 2005 | CN 100544079 C | 23 September 2009 |
| | | CN 1585163 A | 23 February 2005 |
| | | JP 2005-063978 A | 10 March 2005 |
| | | JP 4170966 B2 | 22 October 2008 |
| | | KR 10-0496306 B1 | 17 June 2005 |
| | | US 2005-0079420 A1 | 14 April 2005 |
| | | US 7629083 B2 | 08 December 2009 |
| KR 10-2023-0038702 A | 21 March 2023 | CN 115836412 A | 21 March 2023 |
| | | EP 4182982 A1 | 24 May 2023 |
| | | JP 2023-533800 A | 04 August 2023 |
| | | JP 7807427 B2 | 27 January 2026 |
| | | US 2023-0275232 A1 | 31 August 2023 |
| | | WO 2022-013070 A1 | 20 January 2022 |
| KR 10-2021-0124887 A | 15 October 2021 | EP 3913706 A1 | 24 November 2021 |
| | | EP 3913706 A4 | 16 March 2022 |
| | | JP 2022-531997 A | 13 July 2022 |
| | | JP 7252988 B2 | 05 April 2023 |
| | | KR 10-2567300 B1 | 17 August 2023 |
| | | US 2022-0052342 A1 | 17 February 2022 |
| | | WO 2021-195835 A1 | 07 October 2021 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020240195959
- KR 1020250175151